# EUROPEAN PATENT APPLICATION

(11) **EP 1 126 098 A1**
(43) Date of publication of application: **22.08.2001**
(21) Application number: 00200554.4
(22) Date of filing: 18.02.2000
(51) Int. Cl.: E04D 13/10, E04D 3/36

(54) **Clamping device**

(71) Applicant: Corus Bausysteme GmbH, 56070 Koblenz (DE)
(72) Inventor: Dürnberger, Hans-Dieter, 56579 Rengsdorf (DE); Fick, Karl Friedrich, 56203 Hoehr-Grenzhausen (DE)
(74) Representative: Kruit, J., Ir.

(57) **Abstract**

The invention relates to a clamping device for clamping on a standing seam of a standing seam structure, the clamping device comprising two clamping parts (14) and a housing (11), the clamping parts (14) together defining a channel (15) for the standing seam, the clamping parts (14) being at least partially received in the housing (11).

According to the invention, the clamping device further comprises clamping means (17,18) for moving the two clamping parts (14) towards each other and thereby fastening the clamping parts (14) onto the standing seam structure.

## Description

The invention relates to a clamping device for clamping on a standing seam of a standing seam structure, the clamping device comprising two clamping parts and a housing, the clamping parts together defining a channel for the standing seam, the clamping parts being at least partially received in the housing.

Nowadays many buildings, and especially the roofs thereof, are constructed from metals panels. These metal panels are slidably attached to retaining elements or retaining clips which are mounted on for instance supporting beams at intervals. The metal panels can slide over the clips, for instance when the metal panels undergo a thermal expansion due to a different temperature.

Since these buildings now have a roof (or wall) consisting of metal panels, it is difficult to attach devices to the roof in a convenient way. It would be possible to use rivets or bolts and nuts, but then it is necessary to be able to reach the interior side of the roof. Moreover, in this way the panels have to be perforated, which causes a higher amount of work and could lead to leaks, and after removal of the device the roof has to be repaired.

From EP 0 952 272 Al a clamping device according to the preamble is known that can be clamped on the standing seam of a standing seam structure, consisting of a housing that is open at two opposite sides and the underside, in which two clamping parts or inserts are received that fit over the head of the standing seam. To ensure correct alignment between the sides of the housing and the inserts, complementary keying formations in the form of lugs on and recesses in the inserts and the interior of the housing are used. Housing and inserts are constructed such that the clamping device can be placed over a standing seam at any place and slid over the standing seam after mounting. To clamp the clamping device onto the standing seam, bolts are screwed through one side of the housing and through one insert and fastened against the head of the standing seam.

A drawback of the known clamping device is that three separate parts are used which have to be assembled on the spot, which can be difficult and cumbersome on for instance a roof. This is because the inserts must be placed on both sides of the head of the standing seam, after which the housing must be placed over the inserts while the latter are still free from each other and from the seam, which is difficult to do. To place the known clamping device on a wall is still more difficult, since the parts of the clamping device can fall down. Also, before fastening on a seam the clamping device can disintegrate easily. Another drawback is that the metal panel will be hindered or no longer be able to slide over a clip anymore when the clamping device is clamped on the seam near the clip, due to the deformation of the seam by the bolts if the clamping pressure is not limited. Still another drawback is that the bolts are placed at a side of the device, where it is difficult to fasten them quick and easy with a tool. Yet another drawback is that the known clamping device is fastened with the help of two bolts, of which the ends are pressed against the seam. If a force is exerted on the clamping device, the shearing forces between the bolts and the seam could become so high that the seam is damaged or is restricted in sliding over a clip.

It is an object of the invention to provide a clamping device that is simple and easy to use. It is another object of the invention to provide a clamping device that can be pre-assembled and can be used in one piece. It is still another object of the invention to provide a clamping device that cannot damage the standing seam on which it has been clamped.

According to the invention, one or more of these objects are reached with a clamping device for clamping on a standing seam of a standing seam structure, the clamping device comprising two clamping parts and a housing, the clamping parts together defining a channel for the standing seam, the clamping parts being at least partially received in the housing, in which the clamping device further comprises clamping means for moving the two clamping parts towards each other and thereby fastening the clamping parts onto the standing seam structure.

Using such clamping means no bolts are needed to fasten the clamping device on the seam. The clamping parts themselves are pressed against the seam, and because they form a channel corresponding to the standing seam, a large contacting surface exists between the seam and the clamping device. Forces exerted on the clamping device can thus be easily transmitted, without possible damage to the seam and without restriction on the sliding of the plates over a clip. Further, the clamping and the fastening of the clamping device is exerted with the same clamping means. Moreover, the clamping force of the clamping parts on the seam is adjustable.

Preferably, the housing has been constructed such that it clamps the clamping parts onto the standing seam when the clamping parts are pulled into the housing by a pull means. In this way, the housing forces the clamping parts towards each other and against the seam.

According to a preferred embodiment, at least one of the clamping parts has a tapered side and the housing has a complimentary tapered side so as to push the clamping parts towards each other when the clamping parts are pulled into the housing by the pull means. With the tapered components, a very simple and effective construction is given by which the clamping parts can be clamped on the standing seam with an adjustable force.

Preferably, the pull means extend in the direction of the top surface of the housing. This has the great advantage that the pull means can be reached from above, making it simple to handle the pull means by hand or tool.

According to a preferred embodiment, the pull means comprise a threaded bolt. If an internal wrenching bolt is used, the head of the bolt can be recessed in the housing, so a device can be easily attached to the surface of the housing without hindrance by a protruding bolt.

Preferably, the bolt engages in a nut which fits in a recess in both clamping parts. Turning the bolt makes the two clamping parts both move upwards, and due to the tapered construction the clamping parts are pressed against the standing seam at the same time. With this construction, only one bolt is needed to clamp the clamping device on the seam, which bolt is also easy to reach. Thus, the clamping device according to the invention can be mounted onto for instance a roof or a wall in a simple and fast way.

Preferably, the top surface of the housing comprises means to attach products such as solar panels or other load bearing structures, et cetera. These means can for instance be screw holes for bolts, or other fastening systems.

Alternatively, the bolt itself is used to attach a product directly on the housing by mounting the product between the head of the bolt and the surface of the housing.

The invention will be elucidated referring to an exemplary embodiment, in view of the accompanying drawing.

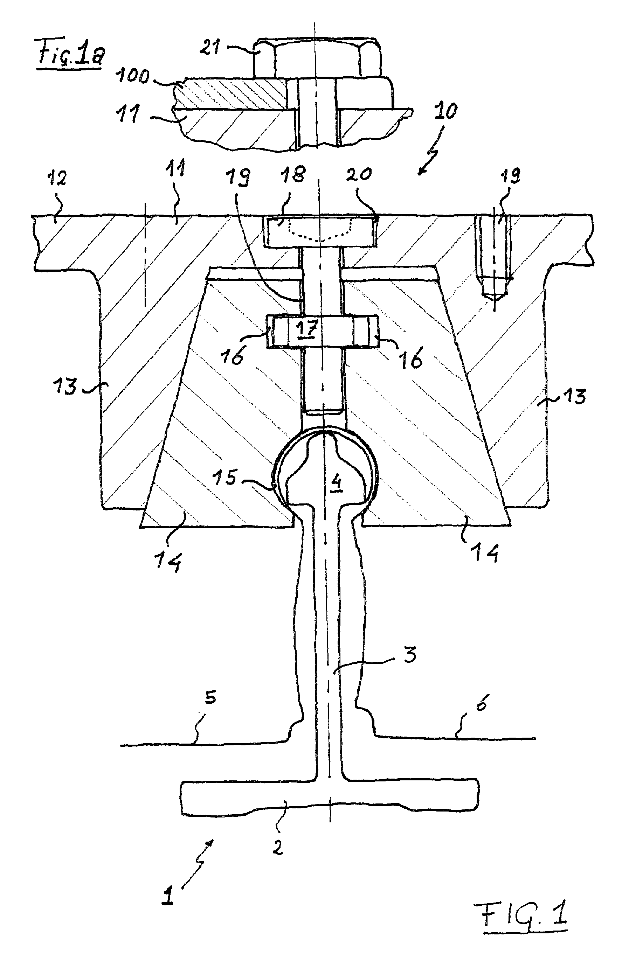

Fig. 1 shows an embodiment of the invention in cross section.

Fig. 1a shows a detail of an alternative embodiment.

Fig. 1 shows a standing seam construction, consisting of a retaining element or clip 1 having a foot 2, which must be attached to a building, with a slender beam 3 on it, and a approximately round head 4 on top, in cross section. Over the head 4 of the retaining element 1 two panels 5, 6 are placed during the construction of the roof or side of a building. The panels 5, 6 generally are metal panels. The construction system of retaining elements or clips and panels makes it possible to mount for instance a roofing of a building very fast.

In the figure, a clamping device 10 in accordance with the invention is placed over and clamped onto the standing seam. The clamping device is formed by a housing 11, two clamping parts 14 and a nut 17 with a bolt 18.

The housing 11 consists of a top plate 12 with integrally formed side walls 13 at its underside. The opposite sides of the side walls 13 are tapered, or, in other words, the distance between the side walls 13 becomes greater towards the lower ends of the side walls 13. The two clamping parts 14 fit in the space between the side walls 13, such that a channel 15 formed by the clamping parts has a cross section that is smaller than that of the head 4 of the retaining element 1 with plates 5 and 6 folded over it, when the clamping parts 14 are inserted in the housing 11, between the side walls 13, as far as possible. To move the clamping parts 14 into the housing 11, the clamping parts 14 form a cavity 16 in the region above the channel 15. In the cavity 16, the nut 17 is fitted, which is best formed such that it will not rotate in the cavity 16. Through the housing 11 and the clamping parts 14 a bore hole 19 is present for the bolt 18, which co-operates with the nut 17. Either the bolt 18 is a countersunk head bolt, of which the head can be sunk in a cavity 20 in the top plate 12 of the housing 11, or it is normal bolt with which a product 100 can be mounted between the head 21 of the bolt and the surface of the housing 11, vide Fig. 1a..

The clamping device is used as follows.

The clamping device consisting of housing 11, clamping parts 14, nut 17 and bolt 18 is pre-assembled. To do so, the nut 17 is inserted in the cavity 16 of one of the clamping parts 14. Than the other clamping part 14 is placed over the nut 17 protruding from the first clamping part, and the clamping parts 14 together are inserted in the housing 14. The bolt 20 is inserted through the top plate 12 and the bore hole 19 in the clamping parts, and partly screwed into the nut 17. The construction of the clamping device is such, that now the clamping parts 14 can move relative to the nut 17, but are kept in the housing by the nut and the bolt, and cannot fall out of the housing 11.

The clamping device is now ready to be mounted on a standing seam of for instance a roof or a wall. There, the clamping device can be simply placed over the head of the standing seam. After the clamping device is placed over the standing seam, only the bolt 18 must be turned with a screw wrench. Due to this action, the clamping parts 14 are pulled into the housing 11 and forced together by the tapered sides thereof, and so the clamping parts are clamped and fastened on the standing seam.

In the housing for instance screw holes 19 can be made for the attachment of a solar panel, a load bearing structure, or any other device to be placed on the roof or against the wall of the building.

The clamping parts 14 can be made from a metal, but also from a plastic material. The housing 11 is best made from a metal.

The length of the clamping device, which in all cross sections has the form as shown in the figure, can be made dependant on the force than is exerted on the clamping device, so the surface pressure on the standing seam can be kept under a certain level for safety so as not to damage the seam. Moreover, with the bolt in the clamping device the pressure on the standing seam can be adjusted accurately.

It will be understood that the invention is not limited to the construction of the clamping device as described above and shown in the figure. For instance, the nut can be left out and the bolt screwed in a threaded hole in one of the clamping parts which also has a cavity in which a protrusion of the other clamping part fits and can move. In this case, only the clamping part without the threaded hole and the mating side wall need to be tapered, since the clamping part with the threaded hole can only move in vertical direction.

## Claims

1. Clamping device for clamping on a standing seam of a standing seam structure, the clamping device comprising two clamping parts and a housing, the clamping parts together defining a channel for the standing seam, the clamping parts being at least partially received in the housing, characterised in that the clamping device further comprises clamping means for moving the two clamping parts towards each other and thereby fastening the clamping parts onto the standing seam structure.

2. Clamping device according to claim 1, characterised in that the housing has been constructed such that it clamps the clamping parts onto the standing seam when the clamping parts are pulled into the housing by a pull means.

3. Clamping device according to claim 2, characterised in that at least one of the clamping parts has a tapered side and the housing has a complimentary tapered side so as to push the clamping parts towards each other when the clamping parts are pulled into the housing by the pull means.

4. Clamping device according to claim 2 or 3, characterised in that the pull means extend in the direction of the top surface of the housing.

5. Clamping device according to claim 2, 3 or 4, characterised in that the pull means comprise a threaded bolt.

6. Clamping device according to claim 5, characterised in that the bolt engages in a nut which fits in a recess in both clamping parts.

7. Clamping device according to any one of the preceding claims, characterised in that the top surface of the housing comprises means to attach products such as solar panels, load bearing structures et cetera.
